# EUROPÄISCHE PATENTSCHRIFT

(11) **EP 2 827 466 B1**
(45) Veröffentlichungstag und Bekanntmachung des Hinweises auf die Patenterteilung: **15.05.2019**
(21) Anmeldenummer: 14157258.6
(22) Anmeldetag: 28.02.2014
(51) Int. Cl.: H02H 1/00, H02H 5/12, G08B 29/04, G05B 19/00, H01H 47/00, G08C 13/00, G05B 9/02, G05B 19/042

(54) **Schaltungsanordnung**
Switching assembly
Circuit

(30) Priorität: 04.03.2013 DE 102013102097
(43) Veröffentlichungstag der Anmeldung: 21.01.2015
(73) Patentinhaber: Phoenix Contact GmbH & Co. KG, 32825 Blomberg (DE)
(72) Erfinder: Peter, Henry, 37574 Einbeck (DE); Rohs, Markus, 32825 Blomberg (DE); Eilers, Markus, 48683 Ahaus (DE); Pott, Thomas, 33604 Bielefeld (DE)
(74) Vertreter: Patentship Patentanwaltsgesellschaft mbH

(56) Entgegenhaltungen:
- EP-A2- 1 566 645
- DE-A1- 3 231 143
- US-A- 5 111 070
- Trompelt: "Sicherheitsschaltgeräte Basisgerät für Not-Aus-und Schutztür-Anwendungen PI 0140-0903 D", , 19. September 2003 (2003-09-19), Seiten 1/7-7/7, XP055152022, Gefunden im Internet: URL:http://www.smi-online.net/Schleicher/d etails_notaus/snt4m63.pdf [gefunden am 2014-11-10]
- "Sicherheitsschaltgerät Not-Aus-Überwachung/Schutzwächter SNO 4063K/SNO 4063KM/SNO 4063KR", , 7. Juli 2005 (2005-07-07), XP055152094, Gefunden im Internet: URL:https://eshop.wieland-electric.com/sho pWieland/getProductDownload/IM0031677.PDF/ R1.188.1280.0/Technisches Datenblatt - Katalogauszug/.PDF [gefunden am 2014-11-10]

## Beschreibung

Die Erfindung betrifft eine Schaltungsanordnung.

In einer Automatisierungseinrichtung besteht eine Sicherheitskette aus einem Sensor (Nothalt), einer Logik (Sicherheitsschaltgerät) und einem Aktor, wie z.B. einem Schütz und Motor. Für bestimmte Sicherheitsintegritätslevel, wie z.B. gemäß EN 61 508, und/oder Kategorien, wie z.B. gemäß EN ISO 13849, wird eine zweikanalige Struktur gefordert.

Für die Querschlusserkennung für z.B. Not-Haltesensoren, Schutztüren etc. wird an einem ersten Eingang ein positives Signal und an einem zweiten Eingang ein negatives Signal angelegt. Kommt es zu einem Querschluss der beiden Leitungen, entsteht ein Kurzschluss, der dazu führt, dass an der Logik keine Spannung mehr anliegt. Ferner gibt es Eingänge, die durch zwei Lichtgittersignale geschaltet werden. Am ersten Eingang liegt ein positiv getaktetes Signal und am zweiten Eingang liegt auch ein positiv getaktetes Signal an. Bei diskret aufgebauten Schaltungen für die funktionale Sicherheit werden die Eingänge immer speziell für die jeweiligen Sensoren ausgelegt was die Verwendbarkeit derartiger Schaltungen einschränkt.

In der Veröffentlichung "Sicherheitsschaltgeräte Basisgerät für Not-Aus- und-Schutztür-Anwendungen PI 0140-0903 D" ist ein Basisgerät für Not-Aus- und Schutztür-Anwendungen offenbart.

In der Veröffentlichung "Sicherheitsschaltgerät Not-Aus-Überwachung/Schutztürwächter SNO 4063K/SNO 4063KM/SNO 4063KR" ist ein Basisgerät für ein- oder zweikanalige Not-Aus-, Schutztür-, Schaltmatten/-leisten und Lichtgitter-Überwachung offenbart.

In der EP 1 566 645 A2 ist eine Kontinuitätstestschaltung mit einer Kopplungsschaltung, einem Lieferdraht und einem Redundanzdraht offenbart.

Es ist daher Aufgabe der vorliegenden Erfindung, eine Schaltungsanordnung bereitzustellen, die flexibel eingesetzt werden kann.

Diese Aufgabe wird durch den Gegenstand nach Anspruch 1 gelöst. Vorteilhafte Ausführungsformen sind Gegenstand der abhängigen Ansprüche, der Beschreibung und der Zeichnungen.

Die vorliegende Erfindung basiert auf der Erkenntnis, dass durch eine Teilschaltung mit einem ersten und zweiten Schaltungszweig eine für verschiedene Eingangssignale geeignete Schaltungsanordnung bereitgestellt werden kann.

Gemäß einem ersten Aspekt wird die Aufgabe dadurch gelöst, dass eine Schaltungsanordnung eine erste Teilschaltung für einen ersten Kanal und eine zweite Teilschaltung mit einem zweiten Eingang und einem zweiten Ausgang zur Verbindung mit einem zweiten Kanal aufweist, wobei die erste Teilschaltung für eine Weiterleitung eines ersten Eingangssignals am ersten Eingang mit einer ersten Polarität ausgebildet ist, und die zweite Teilschaltung mit Hilfe eines ersten und zweiten Schaltungszweiges für eine Weiterleitung eines zweites Eingangssignals am zweiten Eingang mit einer ersten Polarität und einer zweiten, zu der ersten Polarität entgegengesetzten Polarität ausgebildet ist. Dadurch wird der technische Vorteil erreicht, dass an dem ersten Eingang und an dem zweiten Eingang unterschiedliche Signale unterschiedlich verarbeitet werden können. Somit weist die Schaltungsanordnung einen höheren Grad von Flexibilität auf.

In einer vorteilhaften Ausführungsform weist die erste Teilschaltung eine in Sperrrichtung geschaltete Zener-Diode auf. Dadurch wird der technische Vorteil erreicht, dass Signale von der ersten Teilschaltung von dem ersten Eingang zum ersten Ausgang nur dann weitergeleitet werden, wenn sie eine elektrische Spannung aufweisen, die oberhalb der an dem ersten Eingang anliegenden elektrischen Spannung liegt. Somit ist sichergestellt, dass die Schaltungsanordnung keine Signale vom ersten Eingang zum ersten Ausgang weiterleitet, die eine geringe Spannungshöhe aufweisen. Damit ist die Betriebszuverlässigkeit gesteigert. Anstelle von Zener-Dioden können auch andere Halbleiterbauelemente mit einem Lawinendurchbruch verwendet werden, wie z.B. Avalanche-Dioden.

In einer vorteilhaften Ausführungsform weist die Zener-Diode eine Durchbruchsspannung auf, die höher als die Hälfte der am ersten Eingang anliegenden ersten Eingangsspannung ist. Dadurch wird der technische Vorteil erreicht, dass sich bei einem Querschluss vom ersten Eingang und zweiten Eingang die Schaltungsanordnung nicht selbst aktiviert. Somit wird die Betriebssicherheit nochmals gesteigert.

In einer vorteilhaften Ausführungsform weist die erste Teilschaltung eine dem ersten Eingang zugeordnete Verpolschutzdiode auf, die in Durchlassrichtung geschaltet ist. Dadurch wird der technische Vorteil erreicht, dass durch die erste Teilschaltung vom ersten Eingang zum ersten Ausgang nicht Signale mit falscher Polarität weitergeleitet werden.

In einer weiteren vorteilhaften Ausführungsform weist die erste Teilschaltung einen Kondensator zur Spannungsstabilisierung auf. Dadurch wird der technische Vorteil erreicht, dass am ersten Eingang der ersten Teilschaltung anliegende Signale geglättet werden und somit das am ersten Ausgang anliegende Ausgangssignal leichter weiterverarbeitet werden kann.

In einer weiteren vorteilhaften Ausführungsform weist die zweite Teilschaltung eine in Sperrrichtung geschaltete Zener-Diode auf. Dadurch wird der technische Vorteil erreicht, dass Signale von der ersten Teilschaltung von dem ersten Eingang zum ersten Ausgang nur dann weitergeleitet werden, wenn sie eine elektrische Spannung aufweisen, die oberhalb der an dem ersten Eingang anliegenden elektrischen Spannung liegt. Somit ist sichergestellt, dass die Schaltungsanordnung keine Signale vom ersten Eingang zum ersten Ausgang weiterleitet, die eine geringe Spannungshöhe aufweisen. Damit ist die Betriebszuverlässigkeit gesteigert. Anstelle von Zener-Dioden können auch andere Halbleiterbauelemente mit einem Lawinendurchbruch verwendet werden, wie z.B.

### Avalanche-Dioden

In einer vorteilhaften Ausführungsform weist die Zener-Diode eine Durchbruchsspannung auf, die höher als die Hälfte der am zweiten Eingang anliegenden elektrischen Eingangsspannung ist. Dadurch wird der technische Vorteil erreicht, dass sich bei einem Querschluss vom ersten Eingang und zweiten Eingang die Schaltungsanordnung nicht selbst aktiviert. Somit wird die Betriebssicherheit nochmals gesteigert.

Erfindungsgemäß weist die zweite Teilschaltung eine dem zweiten Eingang zugeordnete Verpolschutzdiode auf, die in Durchlassrichtung geschaltet ist. Dadurch wird der technische Vorteil erreicht, dass durch die zweite Teilschaltung vom zweiten Eingang zum zweiten Ausgang nicht Signale mit falscher Polarität weitergeleitet werden.

In einer weiteren vorteilhaften Ausführungsform weist die zweite Teilschaltung einen Kondensator zur Spannungsstabilisierung auf. Dadurch wird der technische Vorteil erreicht, dass am zweiten Eingang der zweiten Teilschaltung anliegende Signale geglättet werden und somit das am zweiten Ausgang anliegende Ausgangssignal leichter weiterverarbeitet werden kann.

In einer weiteren vorteilhaften Ausführungsform weist die zweite Teilschaltung eine zweite Zener-Diode auf, die antiparallel zu der ersten Zener-Diode der ersten Teilschaltung geschaltet ist. Dadurch wird der technische Vorteil erreicht, dass durch die antiparallel geschaltete Zener-Diode am zweiten Eingang der zweiten Teilschaltung anliegende Signale, wie z.B. Massesignale, weitergeleitet werden, wenn die Spannungshöhe der am zweiten Eingang anliegenden Signale höher als die Durchbruchsspannung der zweiten Zener-Diode ist. Somit können mit der zweiten Teilschaltung unterschiedliche am zweiten Eingang anliegende Eingangssignale zum zweiten Ausgang weitergeleitet werden. Anstelle einer zweiten Zener-Diode kann auch ein anderes Halbleiterbauelement mit einem Lawinendurchbruch verwendet werden, wie z.B. eine Avalanche-Diode.

Erfindungsgemäß weist die zweite Teilschaltung eine zweite Verpolschutzdiode auf, die antiparallel zu der ersten Verpolschutzdiode der zweiten Teilschaltung geschaltet ist.

In einer weiteren vorteilhaften Ausführungsform ist in Reihe zu der zweiten Zener-Diode eine Testschaltung geschaltet, die in einem ersten Schaltzustand den zweiten Eingang mit dem zweiten Ausgang elektrisch leitend verbindet und in einem zweiten Schaltzustand den zweiten Eingang vom zweiten Ausgang elektrisch trennt. Dadurch wird der technische Vorteil erreicht, dass mit der Testschaltung sichergestellt wird, dass nicht irrtümlich vom zweiten Eingang Eingangssignale zum zweiten Ausgang weitergeleitet werden.

Gemäß einem zweiten Aspekt wird die Aufgabe durch eine erste Teilschaltung für einen ersten Kanal für eine derartige Schaltungsanordnung gelöst. Dadurch wird der technische Vorteil erreicht, dass an einem ersten Eingang und an dem zweiten Eingang unterschiedliche Signale unterschiedlich verarbeitet werden können.

Gemäß einem dritten Aspekt wird die Aufgabe durch eine zweite Teilschaltung für einen zweiten Kanal für eine derartige Schaltungsanordnung gelöst. Dadurch wird der technische Vorteil erreicht, dass an dem ersten Eingang und an dem zweiten Eingang unterschiedliche Signale unterschiedlich verarbeitet werden können.

Gemäß einem vierten Aspekt wird die Aufgabe durch eine Testschaltung für eine Schaltungsanordnung gelöst. Dadurch wird der technische Vorteil erreicht, dass mit der Testschaltung sichergestellt wird, dass nicht irrtümlich vom zweiten Eingang Eingangssignale zum zweiten Ausgang weitergeleitet werden.

Weitere Ausführungsbeispiele werden Bezug nehmend auf die beiliegende Zeichnung erläutert. Es zeigt:
- Fig. 1: einen schematischen Schaltplan einer Schaltungsanordnung;
- Fig. 2: einen schematischen Schaltplan einer Schaltungsanordnung mit einer Auswertschaltung;
- Fig. 3: einen schematischen Schaltplan einer Schaltungsanordnung mit der Auswertschaltung und einer Sensorschaltung;
- Fig. 4: einen schematischen Schaltplan einer Schaltungsanordnung mit der Auswertschaltung;
- Fig. 5: einen schematischen Schaltplan einer Schaltungsanordnung mit der Auswertschaltung; und
- Fig. 6: einen schematischen Schaltplan einer Schaltungsanordnung mit der Auswertschaltung.

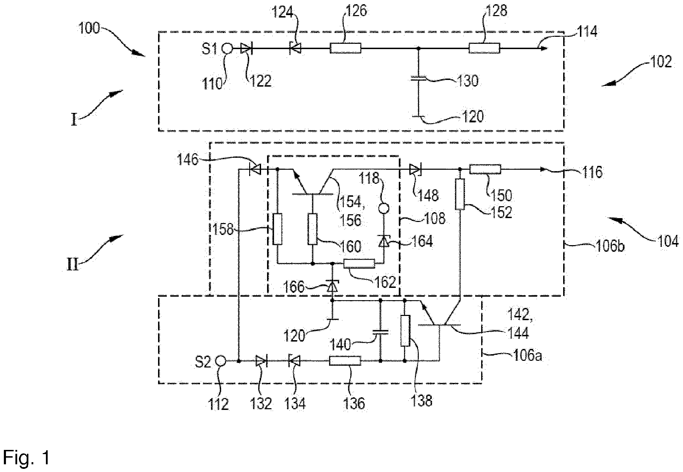

Die in Fig. 1 gezeigte Schaltungsanordnung 100 ist im vorliegenden Ausführungsbeispiel als Schaltung zur Querschlusserkennung in einer Sicherheitskette, z.B. bestehend aus einem Nothaltsensor, einem Sicherheitsschaltgerät und einem Aktor, in einer Automatisierungseinrichtung ausgebildet. Im vorliegenden Ausführungsbeispiel ist die Schaltungsanordnung 100 diskret aufgebaut.

Im vorliegenden Ausführungsbeispiel weist die Schaltungsanordnung 100 eine erste Teilschaltung 102 für einen ersten Kanal I und eine zweite Teilschaltung 104 für einen zweiten Kanal II auf. Ferner weist die Schaltungsanordnung 100 im vorliegenden Ausführungsbeispiel eine Testschaltung 108 auf.

Die erste Teilschaltung 102 für den ersten Kanal I weist einen ersten Eingang 110 und einen ersten Ausgang 114 auf. Ferner weist die erste Teilschaltung 102 einen Masseanschluss 120 auf. Der erste Eingang 110 ist zur Einspeisung von einem ersten Eingangssignal S1 mit einer ersten Polarität ausgebildet, das im vorliegenden Ausführungsbeispiel ein positives oder positiv getaktetes Eingangssignal ist. Im vorliegenden Ausführungsbeispiel weist die erste Teilschaltung 104 eine Verpolschutzdiode 122, eine Zener-Diode 124, einen ersten ohmschen Widerstand 126, einen zweiten ohmschen Widerstand 128 sowie einen Kondensator 130 auf. Die Verpolschutzdiode 122 ist bezogen auf am ersten Eingang 110 anliegenden positiven Eingangssignale in Durchlassrichtung geschaltet, während die Zener-Diode 124 im vorliegenden Ausführungsbeispiel in Sperrrichtung geschaltet ist. Die Zener-Diode 124 im vorliegenden Ausführungsbeispiel kann durch eine Avalanche-Diode (nicht dargestellt) ersetzt werden.

Im vorliegenden Ausführungsbeispiel weist die Zener-Diode 124 eine Durchbruchsspannung auf, die mindestens der Hälfte der an dem ersten Eingang 110 anliegenden Spannungshöhe des Eingangssignals S1 entspricht.

In Richtung vom ersten Eingang 110 zum ersten Ausgang 114 folgt auf die Zener-Diode 124 der erste ohmsche Widerstand 126, auf dem der zweite ohmsche Widerstand 128 folgt, wobei im vorliegenden Ausführungsbeispiel zwischen dem ersten ohmschen Widerstand 126 und dem zweiten ohmschen Widerstand 128 der Kondensator 130 elektrisch leitend mit dem Masseanschluss 120 verbunden ist. Der Kondensator 130 bewirkt eine Spannungsstabilisierung der an dem ersten Eingang 110 anliegenden Eingangssignale S1. An den ersten Ausgang 114 kann zur Signalverarbeitung ein NPN-Transistor angeschlossen sein.

Die zweite Teilschaltung 104 für den zweiten Kanal II umfasst im vorliegenden Ausführungsbeispiel einen ersten Schaltungsabschnitt 106a und einen zweiten Schaltungsabschnitt 106b.

Die zweite Teilschaltung 104 weist einen zweiten Eingang 112 und einen zweiten Ausgang 116 auf. Ferner ist die zweite Teilschaltung 104 mit dem Masseanschluss 120 elektrisch leitend verbunden.

Der erste Schaltungsabschnitt 106a der zweiten Teilschaltung 104 weist eine erste Verpolschutzdiode 132, eine erste Zener-Diode 134, einen ersten ohmschen Widerstand 136, einen zweiten ohmschen Widerstand 138 und einen Kondensator 140 auf. Ferner weist der erste Schaltungsabschnitt 106a ein Schaltelement 142, das im vorliegenden Ausführungsbeispiel ein Transistor 144, wie z.B. ein Bipolartransistor, ist. Die erste Verpolschutzdiode 132 weist im vorliegenden Ausführungsbeispiel die gleiche Polarität wie die Verpolschutzdiode 122 der Teilschaltung 102 auf. Somit leitet die erste Verpolschutzdiode 132 an dem zweiten Eingang 112 anliegende Eingangssignale S2 mit einer positiven Polarität, im vorliegenden Ausführungsbeispiel Eingangssignale mit einer positiven elektrische Spannung oder positiv getaktete Eingangssignale sind, weiter in Richtung zu dem Transistor 144, welcher das Signal am zweiten Ausgang 116 freigibt. In Richtung von dem zweiten Eingang 112 zu dem zweiten Ausgang 116 folgt auf die erste Verpolschutzdiode 132 eine erste Zener-Diode 134. Die erste Zener-Diode 134 weist im vorliegenden Ausführungsbeispiel eine Durchbruchsspannung auf, die mindestens der Hälfte der an dem zweiten Eingang 112 anliegenden elektrischen Eingangsspannung entspricht. Die erste Zener-Diode 134 im vorliegenden Ausführungsbeispiel kann durch eine Avalanche-Diode (nicht dargestellt) ersetzt werden. Auf die erste Zener-Diode 134 folgt der erste ohmsche Widerstand 136. Mit dem ersten ohmschen Widerstand 136 sind elektrisch leitend der Kondensator 140 zur Spannungsstabilisierung, der zweite ohmsche Widerstand 138 sowie der Transistor 144verbunden. Der Transistor 144 ist im vorliegenden Ausführungsbeispiel ein Bipolartransistor.

Somit verbinden im vorliegenden Ausführungsbeispiel die erste Verpolschutzdiode 132, die erste Zener-Diode 134 und der erste ohmsche Widerstand 136 den zweiten Eingang 112 mit der Basis des Transistors 144. Parallel zur Basis-Emitter-Strecke des Transistors 144 ist sowohl der Kondensator 140 als auch der zweite ohmsche Widerstand 138 geschaltet. Ferner sind im vorliegenden Ausführungsbeispiel sowohl der Emitter des Transistors 144, der zweite ohmsche Widerstand 138 und der Kondensator 140 mit dem Masseanschluss 120 elektrisch leitend verbunden.

Der zweite Eingang 112 sowie der Kollektor des Transistors 144 sind, wie nun beschrieben wird, mit dem zweiten Schaltungsabschnitt 106b der zweiten Teilschaltung 104 für den zweiten Kanal II wie folgt elektrisch verbunden:
Der zweite Schaltungsabschnitt 106b weist im vorliegenden Ausführungsbeispiel eine zweite Verpolschutzdiode 146, eine zweite Zener-Diode 148, einen ersten ohmschen Widerstand 150 und einen zweiten ohmschen Widerstand 152 auf. Die zweite Zener-Diode 148 im vorliegenden Ausführungsbeispiel kann durch eine Avalanche-Diode (nicht dargestellt) ersetzt werden.

Die zweite Verpolschutzdiode 146 ist antiparallel zu der ersten Verpolschutzdiode 132 des ersten Schaltungsabschnitts 106a geschaltet. Somit lässt im vorliegenden Ausführungsbeispiel die zweite Verpolschutzdiode 146 nur zweite Eingangssignale S2 von dem zweiten Eingang 112 zu dem zweiten Ausgang 116 durch, die eine zweite Polarität aufweisen, die von der ersten Polarität abweichen, die die erste Verpolschutzdiode 132 nicht passieren können. Es handelt sich hierbei im vorliegenden Ausführungsbeispiel bei der zweiten Polarität um Massesignale oder um Eingangssignale mit negativer elektrischer Spannung. In Richtung von dem zweiten Eingang 112 zu dem zweiten Ausgang 116 folgt auf die zweite Verpolschutzdiode 146 die Testschaltung 108, an die sich die zweite Zener-Diode 148 anschließt. Die zweite Zener-Diode 148 ist antiparallel geschaltet zu der ersten Zener-Diode 134 des ersten Schaltungsabschnitts 106a. Ferner weist die zweite Zener-Diode 148 im vorliegenden Ausführungsbeispiel eine Durchbruchsspannung auf, die der Durchbruchsspannung der ersten Zener-Diode 134 entspricht. Somit hat die zweite Zener-Diode 148 die gleiche Funktion wie die erste Zener-Diode 134.

Zwischen der zweiten Zener-Diode 148 und dem zweiten Ausgang 116 ist der zweite ohmsche Widerstand 150 angeordnet. Ferner ist mit dem zweiten Ausgang 116 über den ersten ohmschen Widerstand 150 und dem zweiten ohmschen Widerstand 152 eine elektrisch leitende Verbindung mit dem Kollektor des Transistors 144 gebildet.

Somit gelangen an dem zweiten Eingang 112 anliegende zweite Eingangssignal S2, wenn sie positive oder positiv getaktete Eingangssignale sind, über die erste Verpolschutzdiode 132, die erste Zener-Diode 134, den ohmschen Widerstand 136, die Basis-Kollektorstrecke des Transistors 144, den ersten ohmschen Widerstand 150 und den zweiten ohmschen Widerstand 152 zu dem Transistor 144, welcher das Signal an dem zweiten Ausgang 116 freigibt.

Die Testschaltung 108 hingegen weist im vorliegenden Ausführungsbeispiel ein Schaltelement 154 auf, das im vorliegenden Ausführungsbeispiel als Transistor 156 ausgebildet ist. Der Transistor 156 ist im vorliegenden Ausführungsbeispiel als Bipolartransistor ausgebildet. Ferner weist die Testschaltung 108 im vorliegenden Ausführungsbeispiel einen ersten ohmschen Widerstand 158, einen zweiten ohmschen Widerstand 160, einen dritten ohmschen Widerstand 162, eine Eingangs-Zener-Diode 164 sowie eine weitere Zener-Diode 166 auf. Außerdem weist im vorliegenden Ausführungsbeispiel die Testschaltung 108 einen Steueranschluss 118 auf.

Der Steueranschluss 118 ist im vorliegenden Ausführungsbeispiel über die Eingangs-Zener-Diode 164 sowie den dritten ohmschen Widerstand 162 und den zweiten ohmschen Widerstand 160 mit der Basis des Transistors 156 verbunden. Ferner ist parallel zu dem zweiten ohmschen Widerstand 160 der erste ohmsche Widerstand 158 geschaltet, der somit über den zweiten ohmschen Widerstand 160 die Basis mit dem Emitter des Transistors 156 elektrisch leitend verbindet sowie elektrisch leitend mit der zweiten Verpolschutzdiode 146 verbunden ist. Schließlich ist der Kollektor des Transistors 156 elektrisch leitend mit der zweiten Zener-Diode 148 verbunden. Des Weiteren sind im vorliegenden Ausführungsbeispiel der erste ohmsche Widerstände 158, der zweite ohmsche Widerstand 160 und der dritte ohmsche Widerstand 162 über die weitere Zener-Diode 166 elektrisch leitend mit dem Masseanschluss 120 verbunden.

Im Betrieb wird der erste Eingang 110 der ersten Teilschaltung 102 wie schon beschrieben mit dem ersten Eingangssignal S1 mit der ersten Polarität belegt, das im vorliegenden Ausführungsbeispiel ein positives oder positiv getaktetes Eingangssignal ist. Der zweite Eingang 112 der zweiten Teilschaltung 104 hingegen kann im Betrieb mit dem zweiten Eingangssignal S2 mit der ersten Polarität oder der zweiten Polarität belegt werden. Im vorliegenden Ausführungsbeispiel ist die erste Polarität ein positives oder ein getaktet positives Eingangssignal, während die zweite Polarität ein Massesignal ist. Positive oder positiv getaktete Eingangssignale werden, wie schon beschrieben, vom zweiten Eingang 112 zu dem Schaltelement 142 weiterleitet, welcher das Signal am zweiten Ausgang 116 freigibt.

Massesignale, die an dem zweiten Eingang 112 anliegen, werden hingegen über die Testschaltung 108 zum zweiten Ausgang 116 weitergeleitet. Dabei kann durch Anlegen von Steuersignalen an dem Steueranschluss 118 die elektrische Spannung teilweise weggeschaltet werden, um einen Selbsttest des digitalen Ausgangs 116 zu ermöglichen. Hierbei bewirkt das an dem Steueranschluss 118 liegende Steuersignal, dass die Emitter-Kollektor-Strecke des Transistors 156 leitend wird bzw. elektrisch sperrt. Somit stellt sich am zweiten Eingang 112 nur eine maximale Spannung von kleiner 5 V ein, welches ein definierter Einschaltpegel für digitale Geräte ist. Es erfolgt erst eine Freigabe, wenn das definierte Massesignal anliegt.

Mit der Schaltungsanordnung 100 ist es somit möglich möglich, Signale folgender Sensoren zu verarbeiten: Nothalt zweikanalig (Eingang 1: 24 Volt, Eingang 2: 0 Volt), Nothalt einkanalig (Eingang 1: 24 Volt, Eingang 2: 24 Volt), Schutztürschalter zweikanalig (Eingang 1: 24 Volt, Eingang 2: 0 Volt), Schutztürschalter einkanalig (Eingang 1: 24 Volt, Eingang 2: 24 Volt), Lichtgitter einkanalig/zweikanalig (Eingang 1: 24 Volt getaktet, Eingang 2: 24 Volt getaktet).

Somit ist die Schaltungsanordnung 100 für eine Mehrzahl von Sensoren geeignet.

Die zweite Teilschaltung 104 kann ferner einen ersten Schaltungszweig zur Verarbeitung eines zweiten Eingangssignals S2 mit der ersten Polarität und einen zweiten Schaltungszweig zur Verarbeitung eines zweiten Eingangssignals S2 mit der zweiten Polarität umfassen, wobei der erste Schaltungszweig die erste Verpolschutzdiode 132, einen Anschluss 120 und ein Schaltelement 142 umfasst, wobei die erste Verpolschutzdiode 132 in Durchlassrichtung für Signale mit der ersten Polarität geschaltet ist, wobei das Schaltelement 142 mit der ersten Verpolschutzdiode 132 elektrisch leitend verbunden und ausgebildet ist, ansprechend auf Empfang eines Signals mit der ersten Polarität den zweiten Ausgang 116 mit dem Anschluss 120 elektrisch leitend zu verbinden; und wobei der zweite Schaltungszweig eine zweite Verpolschutzdiode 146 umfasst, wobei die zweite Verpolschutzdiode 146 in Durchlassrichtung für Signale mit der zweiten Polarität geschaltet ist, und wobei die zweite Verpolschutzdiode 146 mit dem zweiten Ausgang 116 elektrisch leitend verbunden ist.

Erfindungsgemäß ist der Anschluss 120 ein Masseanschluss.

Das Schaltelement 142 kann einen Transistor 144 umfassen, welcher mit dem Anschluss 120 und dem zweiten Ausgang 116 elektrisch leitend verbunden ist.

Der erste Schaltungszweig kann ferner die erste Zener-Diode 134 umfassen und die erste Zener-Diode 134 kann in Reihe mit der ersten Verpolschutzdiode 132 geschaltet sein. Der erste Schaltungszweig kann ferner den Kondensator 140 zur Spannungsstabilisierung umfassen.

Der zweite Schaltungszweig kann ferner die zweite Zener-Diode 148 umfassen und die zweite Zener-Diode 148 kann in Reihe mit der zweiten Verpolschutzdiode 146 geschaltet sein.

Mittels der zweiten Teilschaltung 104 kann das zweite Eingangssignal S2 in ein zweites Ausgangssignal umgewandelt werden, welches über den zweiten Ausgang 116 ausgegeben werden kann. Beispielsweise ist das zweite Eingangssignal S2 ein getaktetes positives Signal. Mittels der ersten Verpolschutzdiode 132 können aus dem zweiten Eingangssignal S2 Anteile mit negativer elektrischer Spannung oder Massesignale und mittels der ersten Zener-Diode 134 Anteile mit niedriger positiver elektrischer Spannung gefiltert werden, um ein zweites gefiltertes Signal zu erhalten. Mittels des Kondensators 140 zur Spannungsstabilisierung kann das zweite gefilterte Signal geglättet werden, um ein zweites geglättetes Signal zu erhalten. Mittels des zweiten geglätteten Signals kann der Transistor 144, welcher im vorliegenden Ausführungsbeispiel als NPN-Transistor ausgebildet ist, leitend geschaltet werden. Dadurch wird der zweite Ausgang 116 mit dem Masseanschluss 120 elektrisch leitend verbunden. Die zweite Verpolschutzdiode 146 verhindert eine elektrische Leitung zwischen dem zweiten Eingang 112 und dem Transistor 156. Das zweite Ausgangssignal ist somit ein Massesignal.

Alternativ kann das zweite Eingangssignal S2 ein konstantes positives Signal sein, dessen elektrische Spannung größer ist als die Durchbruchsspannung der ersten Zener-Diode 134. An der Basis des Transistors 144, welcher im vorliegenden Ausführungsbeispiel als NPN-Transistor ausgebildet ist, liegt in diesem Fall ein konstantes positives Signal an. Dadurch wird der Transistor 144 leitend geschaltet und der zweite Ausgang 116 wird mit dem Masseanschluss 120 elektrisch leitend verbunden. Die zweite Verpolschutzdiode 146 verhindert eine elektrische Leitung zwischen dem zweiten Eingang 112 und dem Transistor 156. Das zweite Ausgangssignal ist somit ein Massesignal.

Alternativ kann das zweite Eingangssignal S2 ferner ein konstantes Massesignal sein. Da der Transistor 156 mittels des Steueranschlusses 118 leitend geschalten ist, ist der zweite Ausgang 116 mit dem zweiten Eingang 112 elektrisch leitend verbunden. Das zweite Ausgangssignal ist somit ein Massesignal.

Mittels der ersten Teilschaltung 102 kann das erste Eingangssignal S1 in ein erstes Ausgangssignal umgewandelt werden, welches über den ersten Ausgang 114 ausgegeben werden kann. Beispielsweise ist das erste Eingangssignal S1 ein getaktetes positives Signal. Mittels der Verpolschutzdiode 122 können aus dem ersten Eingangssignal S1 Anteile mit negativer elektrischer Spannung oder Massesignale und mittels der Zener-Diode 124 Anteile mit niedriger positiver elektrischer Spannung gefiltert werden, um ein erstes gefiltertes Signal zu erhalten. Mittels des Kondensators 130 zur Spannungsstabilisierung kann das erste gefilterte Signal geglättet werden, um das erstes Ausgangssignal zu erhalten. Das erste Ausgangssignal ist in diesem Fall ein positives Signal.

Alternativ kann das erste Eingangssignal S1 ein konstantes positives Signal sein, dessen elektrische Spannung größer ist als die Durchbruchsspannung der Zener-Diode 124. Das erste Ausgangssignal ist in diesem Fall ein konstantes positives Signal.

Alternativ kann das erste Eingangssignal S1 ferner ein Massesignal sein. In diesem Fall wird das erste Eingangssignal S1 durch die Verpolschutzdiode 124 vollständig gefiltert und am ersten Ausgang 114 liegt kein Signal an.

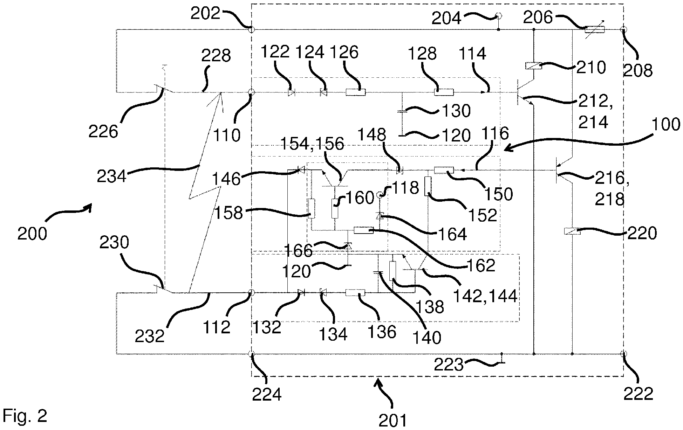

Fig. 2 zeigt einen schematischen Schaltplan einer Schaltungsanordnung 200 mit einer Auswertschaltung 201, welche die in der Fig. 1 dargestellte Schaltungsanordnung 100 umfasst. Die Schaltungsanordnung 200 umfasst ferner gemeinsam schaltbare Schaltelemente 226 und 230 sowie elektrische Leitungen 228 und 232. Ferner ist ein Querschluss 234 zwischen den elektrischen Leitungen 228 und 232 abgebildet.

Die Auswertschaltung 201 umfasst ferner einen Anschluss 202, einen Anschluss 204, einen Kaltleiter 206 und einen Anschluss 208. Ferner umfasst die Auswertschaltung 201 ein Schaltelement 210, wie ein Relais, ein Schaltelement 212, welches im vorliegenden Ausführungsbeispiel ein Transistor 214 ist, ein Schaltelement 216, welches im vorliegenden Ausführungsbeispiel ein Transistor 218 ist, ein Schaltelement 220, wie ein Relais, einen Anschluss 224, einen Anschluss 223 und einen Anschluss 222.

Der Anschluss 202 ist über das Schaltelement 226 und die elektrische Leitung 228 mit dem ersten Eingang 110 elektrisch verbindbar. Ferner ist der Anschluss 224 über das Schaltelement 230 und die elektrische Leitung 232 mit dem zweiten Eingang 112 elektrisch verbindbar.

Die Anschlüsse 208 und 222 können Anschlüsse für eine elektrische Spannungsversorgung sein. Ferner kann an dem Anschluss 208 ein elektrisches Potential von 24V und an dem Anschluss 222 ein elektrisches Potential von 0V anliegen. Der Anschluss 204 kann mit dem Steueranschluss 118 elektrisch leitend verbunden sein, um den Steueranschluss 118 mit dem Anschluss 208 elektrisch leitend zu verbinden. Ferner kann der Anschluss 223 mit den Masseanschlüssen 120 elektrisch leitend verbunden sein, um die Masseanschlüsse 120 mit dem Anschluss 222 elektrisch leitend zu verbinden.

Der erste Ausgang 114 der Schaltungsanordnung 100 ist mit der Basis des Transistors 214 elektrisch leitend verbunden. Ferner ist der zweite Ausgang 116 der Schaltungsanordnung 100 mit der Basis des Transistors 218 elektrisch leitend verbunden. Gibt der erste Ausgang 114 ein positives Signal aus, so kann der als NPN-Transistor ausgebildete Transistor 214 leitend geschaltet und ein elektrischer Stromfluss durch das Schaltelement 210 möglich sein. Gibt der zweite Ausgang 116 ferner ein Massesignal aus, so kann der als PNP-Transistor ausgebildete Transistor 218 leitend geschaltet und ein elektrischer Stromfluss durch das Schaltelement 220 möglich sein.

Der Kaltleiter 206 kann ein Positive Temperature Coefficient (PTC) Widerstand oder ein PTC-Thermistor sein.

Das Schaltelement 210 kann zwischen einem ersten Schaltzustand und einem zweiten Schaltzustand schaltbar sein. Beispielsweise wird mittels des Schaltelements 210 ein Gerät gesteuert, welches in dem ersten Schaltzustand deaktiviert und in dem zweiten Schaltzustand aktiviert ist. Ferner kann das Schaltelement 220 zwischen einem ersten Schaltzustand und einem zweiten Schaltzustand schaltbar sein. Beispielsweise wird mittels des Schaltelements 220 ein weiteres Gerät gesteuert, welches in dem ersten Schaltzustand deaktiviert und in dem zweiten Schaltzustand aktiviert ist.

Die Schaltelemente 226 und 230 können Elemente eines Not-Halts oder eines Schutztürschalters sein. Ferner können die Schaltelemente 226 und 230 gemeinsam betätigbar sein.

Ist das Schaltelement 226 geöffnet, liegt am ersten Eingang 110 kein Signal an und der Transistor 214 ist nichtleitend geschaltet. Dadurch findet kein elektrischer Stromfluss durch das Schaltelement 210 statt und das Schaltelement 210 kann in den ersten Schaltzustand geschaltet werden. Ist das Schaltelement 226 geschlossen und liegt am Anschluss 208 ein positives Signal, beispielsweise mit einer elektrischen Spannung von 24V, an, dann liegt an dem ersten Eingang 110 ein positives Signal an und der Transistor 214 kann leitend geschaltet sein. Dadurch kann ein elektrischer Stromfluss durch das Schaltelement 210 stattfinden und das Schaltelement 210 kann in den zweiten Schaltzustand geschaltet werden.

Ist das Schaltelement 230 geöffnet, liegt am zweiten Eingang 112 kein Signal an und der Transistor 218 ist nichtleitend geschaltet. Dadurch findet kein elektrischer Stromfluss durch das Schaltelement 220 statt und das Schaltelement 220 kann in den ersten Schaltzustand geschaltet werden. Ist das Schaltelement 230 geschlossen und liegt am Anschluss 222 ein Massesignal, beispielsweise mit einer elektrischen Spannung von 0V, an, dann liegt an dem zweiten Eingang 112 ein Massesignal an und der Transistor 218 kann leitend geschaltet sein. Dadurch kann ein elektrischer Stromfluss durch das Schaltelement 220 stattfinden und das Schaltelement 220 kann in den zweiten Schaltzustand geschaltet werden.

Die elektrische Leitung 228 und die elektrische Leitung 232 können über den Querschluss 234 quergeschlossen sein, wodurch ein Kurzschlussstrom zwischen den Anschlüssen 208 und 222 fließen kann. Aufgrund der Zener-Diode 124 fließt kein elektrischer Strom von dem Steueranschluss 118 über den zweiten Eingang 112 und über den Querschluss 234 zu dem ersten Eingang 110. Der Kurzschlussstrom kann den Kaltleiter 206 erwärmen und den ohmschen Widerstand des Kaltleiters 206 erhöhen. Dadurch kann der ohmsche Widerstand des Kaltleiters 206 derart erhöht werden, dass ein Großteil der elektrischen Spannung über dem Kaltleiter 206 abfällt und an dem ersten Ausgang 114 und an dem zweiten Ausgang 116 keine Signale anliegen. Dadurch wird beispielsweise ermöglicht, dass die Schaltelemente 210 und 220 bei einem Querschluss 234 jeweils in den ersten Schaltzustand geschaltet werden können, um das jeweilige zu steuernde Gerät zu deaktivieren. Gemäß einer Ausführungsform kann der Kaltleiter 206 durch eine elektrische Sicherung, wie eine Schmelzsicherung oder einen Leitungsschutzschalter, ersetzt werden.

Gemäß einer Ausführungsform kann bei einem auftretenden Querschluss 234 ein Kurzschluss entstehen, welcher durch den Kaltleiter 206 begrenzt wird. Hierbei kann die gesamte Spannung über dem Kaltleiter 206 abfallen.

Gemäß einer Ausführungsform kann mittels der Schaltungsanordnung 200 eine zweikanalige Sensoransteuerung mit Querschlusserkennung realisiert werden.

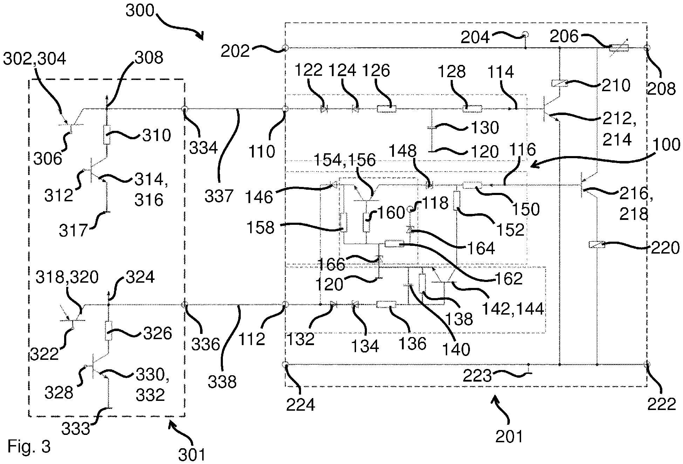

Fig. 3 zeigt einen schematischen Schaltplan einer Schaltungsanordnung 300 mit der Auswertschaltung 201 und einer Sensorschaltung 301. Die Sensorschaltung 301 kann ein Element eines zweikanaligen Lichtgittersensors sein.

Die Sensorschaltung 301 umfasst ein Schaltelement 302, welches im vorliegenden Ausführungsbeispiel ein Transistor 304 ist, einen Steueranschluss 306 zum Steuern des Transistors 304, einen Ausgang 308, einen ohmschen Widerstand 310, ein Schaltelement 314, welches im vorliegenden Ausführungsbeispiel ein Transistor 316 ist, einen Steueranschluss 312 zum Steuern des Transistors 316, einen Masseanschluss 317 und einen Ausgang 334, welcher über die elektrische Leitung 337 mit dem ersten Eingang 110 elektrisch verbunden ist.

Ferner umfasst die Sensorschaltung 301 ein Schaltelement 318, welches im vorliegenden Ausführungsbeispiel ein Transistor 320 ist, einen Steueranschluss 322 zum Steuern des Transistors 320, einen Ausgang 324, einen ohmschen Widerstand 326, ein Schaltelement 330, welches im vorliegenden Ausführungsbeispiel ein Transistor 332 ist, einen Steueranschluss 328 zum Steuern des Transistors 332, einen Masseanschluss 333 und einen Ausgang 336, welcher über die elektrische Leitung 338 mit dem zweiten Eingang 112 elektrisch verbunden ist.

Der Ausgang 308 kann einer Signalrücklesung zugeordnet sein. Ferner kann der Ausgang 324 einer weiteren Signalrücklesung zugeordnet sein.

Die Anschlüsse 208 und 222 können Anschlüsse für eine elektrische Spannungsversorgung sein. Ferner kann an dem Anschluss 208 ein elektrisches Potential von 24V und an dem Anschluss 222 ein elektrisches Potential von 0V anliegen. Der Anschluss 204 kann mit dem Steueranschluss 118 elektrisch leitend verbunden sein, um den Steueranschluss 118 mit dem Anschluss 208 elektrisch leitend zu verbinden. Ferner kann der Anschluss 223 mit den Masseanschlüssen 120 elektrisch leitend verbunden sein, um die Masseanschlüsse 120 mit dem Anschluss 222 elektrisch leitend zu verbinden.

Über den Ausgang 334 kann ein getaktetes Signal mit einer elektrischen Spannung von 24V ausgegeben werden. Beispielsweise wird das getaktete Signal über den Transistor 304 bereitgestellt, wenn dieser über den Steueranschluss 306 leitend geschaltet ist. Dadurch kann der Transistor 214 leitend geschaltet und das Schaltelement 210 in den zweiten Schaltzustand geschaltet werden. Wird der Transistor 304 über den Steueranschluss 306 nichtleitend geschaltet, wird über den Ausgang 334 kein Signal ausgegeben. Dadurch kann der Transistor 214 nichtleitend geschaltet und das Schaltelement 210 in den ersten Schaltzustand geschaltet werden. Mittels des Transistors 316 und des Masseanschlusses 317 kann die elektrische Leitung 337 über den ohmschen Widerstand 310 entladen werden.

Über den Ausgang 336 kann ein getaktetes Signal mit einer elektrischen Spannung von 24V ausgegeben werden. Beispielsweise wird das getaktete Signal über den Transistor 320 bereitgestellt, wenn dieser über den Steueranschluss 322 leitend geschaltet ist. Dadurch kann der Transistor 218 leitend geschaltet und das Schaltelement 220 in den zweiten Schaltzustand geschaltet werden. Wird der Transistor 320 über den Steueranschluss 322 nichtleitend geschaltet, wird über den Ausgang 336 kein Signal ausgegeben. Dadurch kann der Transistor 218 nichtleitend geschaltet und das Schaltelement 220 in den ersten Schaltzustand geschaltet werden. Mittels des Transistors 332 und des Masseanschlusses 333 kann die elektrische Leitung 338 über den ohmschen Widerstand 326 entladen werden.

Durch das Entladen der elektrischen Leitung 338 über den Masseanschluss 333 wird an dem zweite Eingang 112 ein Massesignal angelegt und der Transistor 218 kann leitend geschaltet werden. Gemäß einer Ausführungsform kann der durch die Reihenschaltung des ohmschen Widerstands 326 mit dem ohmschen Widerstand 150 gebildete ohmsche Gesamtwiderstand hoch sein. Dadurch kann der elektrische Strom zwischen dem Transistor 218 und dem Masseanschluss 333 klein sein und der durch den Transistor 218 gesteuerte elektrische Stromfluss durch das Schaltelement 220 kann zu klein sein, um das Schaltelement 220 von dem ersten Schaltzustand in den zweiten Schaltzustand zu schalten.

Der Ausgang 324 und der Steueranschluss 118 sind elektrisch leitend verbunden. Eine mit dem Ausgang 324 verbundene Signalrückleseeinrichtung kann durch das von dem Steueranschluss 118 ausgegebene elektrische Signal in ihrer Funktion beeinträchtigt werden. Mittels der weiteren Zener-Diode 166 kann die elektrische Spannung des von dem Steueranschluss 118 ausgegebenen und an dem Ausgang 324 empfangenen elektrischen Signals reduziert werden, um die Signalrückleseeinrichtung nicht zu beeinträchtigen.

Gemäß einer Ausführungsform kann der Ausgang 334 ein digital getakteter Ausgang mit einer Spannung von 24V sein. Ferner kann der Ausgang 336 ein digital getakteter Ausgang mit einer Spannung von 24V sein. Der ohmsche Widerstand 310, das Schaltelement 314 bzw. der Transistor 316 und der Masseanschluss 317 können eine Entladeschaltung bilden. Ferner können der ohmsche Widerstand 326, das Schaltelement 330 bzw. der Transistor 332 und der Masseanschluss 334 eine Entladeschaltung bilden.

Gemäß einer Ausführungsform kann bei deaktiviertem Ausgang 336 die elektrische Leitung 338 über den Masseanschluss 333 entladen werden. Mittels des Ausgangs 324 kann, beispielsweise mittels einer Signalrücklesung, eine Deaktivierung des Transistors 320 überprüft werden. Mittels einer durch den ohmschen Widerstand 326, den Transistor 332 und den Masseanschluss 333 gebildeten Entladeschaltung können mögliche Kapazitäten der elektrischen Leitung 338 entladen werden. Hierzu kann der ohmsche Widerstand 326 und der Masseanschluss 333 verwendet werden. Aufgrund der weiteren Zener-Diode 166 kann sich am zweiten Eingang 112 eine maximale Spannung der weiteren Zener-Diode 166 einstellen.

Gemäß einer Ausführungsform kann mittels der Schaltungsanordnung 100 oder einer Messschaltung ein Maß für die Größe des ohmschen Widerstands 326 bestimmt werden. Die Schaltungsanordnung 100 oder die Messschaltung können den Transistor 218 leitend schalten, wenn der ohmsche Widerstand 326 oder ein Widerstandswert ungefähr 2k! oder mehr beträgt. Gemäß einer weiteren Ausführungsform kann der ohmsche Widerstand 326 mehr als 5k! betragen.

Gemäß einer Ausführungsform kann mittels der Schaltungsanordnung 300 eine zweikanalige Sensoransteuerung ohne Querschlusserkennung realisiert werden.

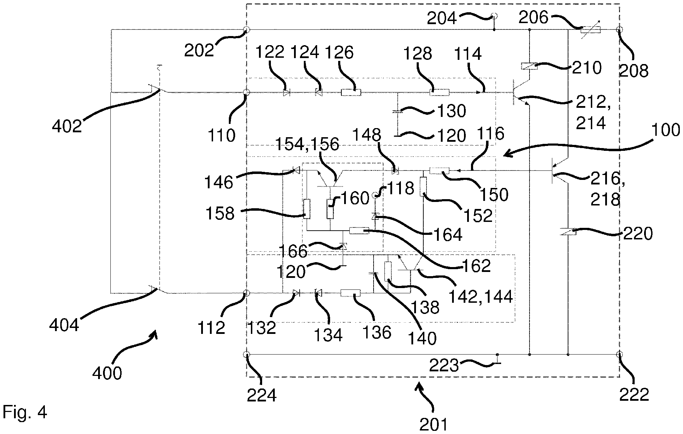

Fig. 4 zeigt einen schematischen Schaltplan einer Schaltungsanordnung 400 mit der Auswertschaltung 201. Die Schaltungsanordnung 400 umfasst ferner gemeinsam betätigbare Schaltelemente 402 und 404. Der Anschluss 202 ist über das Schaltelement 402 mit dem ersten Eingang 110 und über das Schaltelement 404 mit dem zweiten Eingang 112 elektrisch verbindbar.

Die Schaltelemente 402 und 404 können Elemente eines Not-Halts oder eines Schutztürschalters sein.

Ist das Schaltelement 402 geöffnet, liegt am ersten Eingang 110 kein Signal an und der Transistor 214 ist nichtleitend geschaltet. Dadurch findet kein elektrischer Stromfluss durch das Schaltelement 210 statt und das Schaltelement 210 kann in den ersten Schaltzustand geschaltet werden. Ist das Schaltelement 402 geschlossen und liegt am Anschluss 208 ein positives Signal, beispielsweise mit einer elektrischen Spannung von 24V, an, dann liegt an dem ersten Eingang 110 ein positives Signal an und der Transistor 214 kann leitend geschaltet sein. Dadurch kann ein elektrischer Stromfluss durch das Schaltelement 210 stattfinden und das Schaltelement 210 kann in den zweiten Schaltzustand geschaltet werden.

Ist das Schaltelement 404 geöffnet, liegt am zweiten Eingang 112 kein Signal an und der Transistor 218 ist nichtleitend geschaltet. Dadurch findet kein elektrischer Stromfluss durch das Schaltelement 220 statt und das Schaltelement 220 kann in den ersten Schaltzustand geschaltet werden. Ist das Schaltelement 404 geschlossen und liegt am Anschluss 208 ein positives Signal, beispielsweise mit einer elektrischen Spannung von 24V, an, dann liegt an dem zweiten Eingang 112 ein positives Signal an und der Transistor 218 kann leitend geschaltet sein. Dadurch kann ein elektrischer Stromfluss durch das Schaltelement 220 stattfinden und das Schaltelement 220 kann in den zweiten Schaltzustand geschaltet werden.

Gemäß einer Ausführungsform kann mittels der Schaltungsanordnung 400 eine zweikanalige Sensoransteuerung ohne Querschlusserkennung realisiert werden.

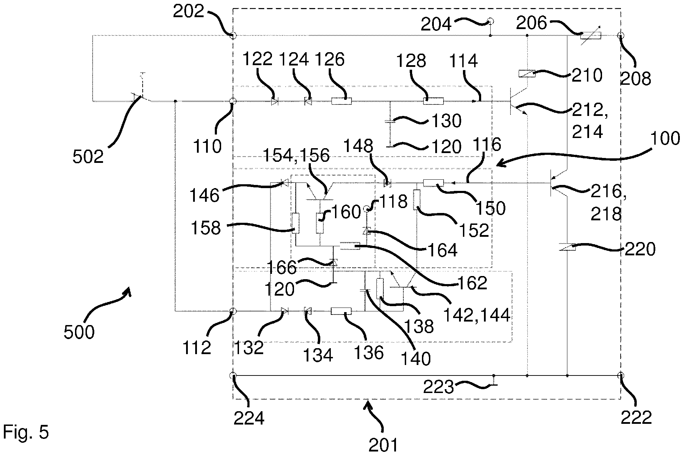

Fig. 5 zeigt einen schematischen Schaltplan einer Schaltungsanordnung 500 mit der Auswertschaltung 201. Die Schaltungsanordnung 500 umfasst ferner ein Schaltelement 502. Der Anschluss 202 ist über das Schaltelement 502 mit dem ersten Eingang 110 und dem zweiten Eingang 112 elektrisch leitend verbindbar.

Das Schaltelement 502 kann ein Element eines Not-Halts oder eines Schutztürschalters sein.

Ist das Schaltelement 502 geöffnet, so liegt am ersten Eingang 110 und am zweiten Eingang 112 kein Signal an. Dadurch sind die Transistoren 214 und 218 nichtleitend geschaltet und es findet kein elektrischer Stromfluss durch die Schaltelemente 210 und 220 statt. Die Schaltelemente 210 und 220 können dadurch in den jeweiligen ersten Schaltzuständen geschaltet werden. Ist das Schaltelement 502 geschlossen und liegt am Anschluss 208 ein positives Signal, beispielsweise mit einer elektrischen Spannung von 24V, an, dann liegt an dem ersten Eingang 110 und dem zweiten Eingang 112 jeweils ein positives Signal an und die Transistoren 214 und 218 können leitend geschaltet sein. Dadurch kann ein elektrischer Stromfluss durch die Schaltelemente 210 und 220 stattfinden und die Schaltelemente 210 und 220 können in den jeweiligen zweiten Schaltzustand geschaltet werden.

Gemäß einer Ausführungsform kann mittels der Schaltungsanordnung 500 eine einkanalige Sensoransteuerung ohne Querschlusserkennung realisiert werden.

Gemäß einer Ausführungsform kann eine einkanalige Sensoransteuerung Anforderungen zum Betrieb eines Sensors genügen.

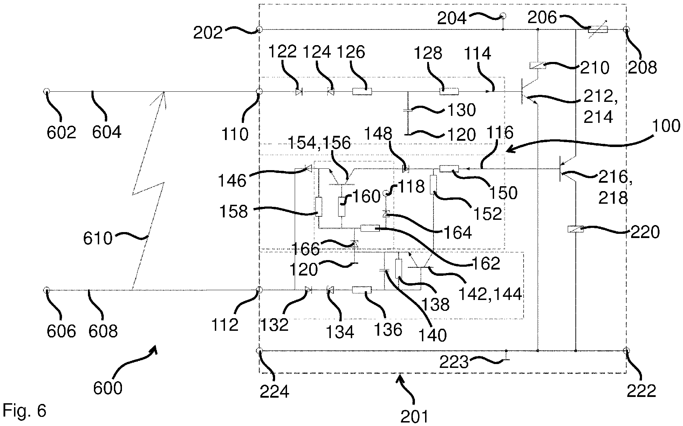

Fig. 6 zeigt einen schematischen Schaltplan einer Schaltungsanordnung 600 mit der Auswertschaltung 201. Ferner sind Ausgänge 602 und 606 abgebildet, welche über elektrische Leitungen 604 und 608 mit der Auswertschaltung 201 verbunden sind. Ferner ist ein Querschluss 610 zwischen den elektrischen Leitungen 604 und 608 abgebildet.

Die Ausgänge 602 und 606 können Elemente eines zweikanaligen Schutztürsensors oder Lichtgittersensors sein. Der Ausgang 602 ist über die elektrische Leitung 604 mit dem ersten Eingang 110 elektrisch leitend verbunden. Der Ausgang 606 ist über die elektrische Leitung 608 mit dem zweiten Eingang 112 elektrisch leitend verbunden. Ferner können die elektrische Leitung 604 und die elektrische Leitung 608 über den Querschluss 610 quergeschlossen sein.

Über den Ausgang 602 kann ein getaktetes Signal mit einer elektrischen Spannung von 24V ausgegeben werden. Dadurch kann der Transistor 214 leitend geschaltet und das Schaltelement 210 in den zweite Schaltzustand geschaltet werden. Ferner kann über den Ausgang 606 ein getaktetes Signal mit einer elektrischen Spannung von 24V ausgegeben werden. Dadurch kann der Transistor 218 leitend geschaltet und das Schaltelement 220 in den zweiten Schaltzustand geschaltet werden.

Die Ausgänge 602 und 606 können jeweils zur Selbstüberwachung mittels Austastlücken oder Testpulsen ausgebildet sein. Mittels eines Erfassens der Austastlücken oder der Testpulse kann der mögliche Querschluss 610 zwischen den elektrischen Leitungen 604 und 608 erkannt werden. Dazu können die Ausgänge 602 und 606 jeweils eine Signalrückleseeinrichtung umfassen. Ferner können die Ausgänge 602 und 606 den in der Fig. 3 gezeigten Ausgängen 334 und 336 entsprechen.

Gemäß einer Ausführungsform kann mittels der Schaltungsanordnung 600 eine zweikanalige Sensoransteuerung ohne Querschlusserkennung realisiert werden.

Gemäß einer Ausführungsform kann der Ausgang 602 ein digital getakteter Ausgang mit einem elektrischen Potential von 24V sein. Ferner kann der Ausgang 606 ein digital getakteter Ausgang mit einem elektrischen Potential von 24V sein.

Gemäß einer Ausführungsform kann bei der Schaltungsanordnung 600 eine Querschlusserkennung von Sensorkreisen extern durch Austastlücken durchgeführt werden.

### BEZUGSZEICHENLISTE

- 100: Schaltungsanordnung
- 102: erste Teilschaltung
- 104: zweite Teilschaltung
- 106a: erster Schaltungsabschnitt
- 106b: zweiter Schaltungsabschnitt
- 108: Testschaltung
- 110: erster Eingang
- 112: zweiter Eingang
- 114: erster Ausgang
- 116: zweiter Ausgang
- 118: Steueranschluss
- 120: Masseanschluss
- 122: Verpolschutzdiode
- 124: Zener-Diode
- 126: erster ohmscher Widerstand
- 128: zweiter ohmscher Widerstand
- 130: Kondensator
- 132: erste Verpolschutzdiode
- 134: erste Zener-Diode
- 136: erster ohmscher Widerstand
- 138: zweiter ohmscher Widerstand
- 140: Kondensator
- 142: Schaltelement
- 144: Transistor
- 146: zweite Verpolschutzdiode
- 148: zweite Zener-Diode
- 150: erster ohmscher Widerstand
- 152: zweiter ohmscher Widerstand
- 154: Schaltelement
- 156: Transistor
- 158: erster ohmscher Widerstand
- 160: zweiter ohmscher Widerstand
- 162: dritter ohmscher Widerstand
- 164: Eingangs-Zener-Diode
- 166: weitere Zener-Diode

- I: erster Kanal
- II: zweiter Kanal

- S1: erstes Eingangssignal
- S2: zweites Eingangssignal

- 200: Schaltungsanordnung
- 201: Auswertschaltung
- 202: Anschluss
- 204: Anschluss
- 206: Kaltleiter
- 208: Anschluss
- 210: Schaltelement
- 212: Schaltelement
- 214: Transistor
- 216: Schaltelement
- 218: Transistor
- 220: Schaltelement
- 222: Anschluss
- 223: Anschluss
- 224: Anschluss
- 226: Schaltelement
- 228: elektrische Leitung
- 230: Schaltelement
- 232: elektrische Leitung
- 234: Querschluss

- 300: Schaltungsanordnung
- 301: Sensorschaltung
- 302: Schaltelement
- 304: Transistor
- 306: Steueranschluss
- 308: Ausgang
- 310: ohmscher Widerstand
- 312: Steueranschluss
- 314: Schaltelement
- 316: Transistor
- 317: Masseanschluss
- 318: Schaltelement
- 320: Transistor
- 322: Steueranschluss
- 324: Ausgang
- 326: ohmscher Widerstand
- 328: Steueranschluss
- 330: Schaltelement
- 332: Transistor
- 333: Masseanschluss
- 334: Ausgang
- 336: Ausgang
- 337: elektrische Leitung
- 338: elektrische Leitung

- 400: Schaltungsanordnung
- 402: Schaltelement
- 404: Schaltelement

- 500: Schaltungsanordnung
- 502: Schaltelement

- 600: Schaltungsanordnung
- 602: Ausgang
- 604: elektrische Leitung
- 606: Ausgang
- 608: elektrische Leitung
- 610: Querschluss

## Patentansprüche

1. Schaltungsanordnung (100), mit einer ersten Teilschaltung (102) für einen ersten Kanal (I) und mit einer zweiten Teilschaltung (104) für einen zweiten Kanal (II), wobei die erste Teilschaltung (102) einen ersten Eingang (110) und einen ersten Ausgang (114) zum Verbinden mit dem ersten Kanal (I) und die zweite Teilschaltung (104) einen zweiten Eingang (112) und einen zweiten Ausgang (116) zum Verbinden mit dem zweiten Kanal (II) aufweist, wobei die erste Teilschaltung (102) für eine Weiterleitung eines ersten Eingangssignals (S1) am ersten Eingang (110) mit einer ersten Polarität ausgebildet ist, und die zweite Teilschaltung (104) für eine Weiterleitung eines zweites Eingangssignals (S2) am zweiten Eingang (112) mit einer ersten Polarität und einer zweiten, zu der ersten Polarität entgegengesetzten Polarität ausgebildet ist,
wobei die zweite Teilschaltung (104) ferner einen ersten Schaltungszweig (106a) zur Verarbeitung eines zweiten Eingangssignals (S2) mit der ersten Polarität und einen zweiten Schaltungszweig (106b) zur Verarbeitung eines zweiten Eingangssignals (S2) mit der zweiten Polarität umfasst,
wobei der erste Schaltungszweig (106a) eine erste Verpolschutzdiode (132), einen Masseanschluss (120) und ein Schaltelement (142) umfasst, wobei die erste Verpolschutzdiode (132) in Durchlassrichtung für Signale mit der ersten Polarität geschaltet ist, und wobei das Schaltelement (142) mit der ersten Verpolschutzdiode (132) elektrisch leitend verbunden und ausgebildet ist, ansprechend auf Empfang eines Signals mit der ersten Polarität den zweiten Ausgang (116) mit dem Masseanschluss (120) elektrisch leitend zu verbinden;
und wobei der zweite Schaltungszweig (106b) eine zweite Verpolschutzdiode (146) umfasst, wobei die zweite Verpolschutzdiode (146) in Durchlassrichtung für Signale mit der zweiten Polarität geschaltet ist, und wobei die zweite Verpolschutzdiode (146) mit dem zweiten Ausgang (116) elektrisch leitend verbunden ist,
wobei mittels der zweiten Teilschaltung (104) das zweite Eingangssignal (S2) in ein zweites Ausgangssignal umgewandelt wird, welches über den zweiten Ausgang (116) ausgegeben wird.

2. Schaltungsanordnung (100) nach Anspruch 1, wobei das Schaltelement (142) einen Transistor (144) umfasst, welcher mit dem Masseanschluss (120) und dem zweiten Ausgang (116) elektrisch leitend verbunden ist.

3. Schaltungsanordnung (100) nach Anspruch 1 oder 2, wobei der erste Schaltungszweig ferner die erste Zener-Diode (134) umfasst, und wobei die erste Zener-Diode (134) in Reihe mit der ersten Verpolschutzdiode (132) geschaltet ist.

4. Schaltungsanordnung (100) nach Anspruch 1, 2 oder 3, wobei der erste Schaltungszweig ferner den Kondensator (140) zur Spannungsstabilisierung umfasst.

5. Schaltungsanordnung (100) nach Anspruch 1, 2, 3 oder 4, wobei der zweite Schaltungszweig ferner die zweite Zener-Diode (148) umfasst, und wobei die zweite Zener-Diode (148) in Reihe mit der zweiten Verpolschutzdiode (146) geschaltet ist.

## Claims

1. Circuit arrangement (100), comprising a first sub-circuit (102) for a first channel (I) and a second sub-circuit (104) for a second channel (II), wherein the first sub-circuit (102) has a first input (110) and a first output (114) for connection to the first channel (I) and the second sub-circuit (104) has a second input (112) and a second output (116) for connection to the second channel (II), wherein the first sub-circuit (102) is configured to forward a first input signal (S1) at the first input (110) having a first polarity and the second sub-circuit (104) is configured to forward a second input signal (S2) at the second input (112) having a first polarity and a second polarity, which is opposite to the first polarity,
wherein the second sub-circuit (104) further comprises a first circuit branch (106a) for processing a second input signal (S2) having the first polarity and a second circuit branch (106b) for processing a second input signal (S2) having the second polarity,
wherein the first circuit branch (106a) comprises a first reverse polarity protection diode (132), a ground terminal (120) and a switching element (142), wherein the first reverse polarity protection diode (132) is switched into the forward direction for signals having the first polarity, and wherein the switching element (142) is electrically conductively connected to the first reverse polarity protection diode (132) and is configured to electrically conductively connect the second output (116) to the ground terminal (120) in response to receiving a signal having the first polarity,
and wherein the second circuit branch (106b) comprises a second reverse polarity protection diode (146), wherein the second reverse polarity protection diode (146) is switched into the forward direction for signals having the second polarity, and wherein the second reverse polarity protection diode (146) is electrically conductively connected to the second output (116),
wherein, by means of the second sub-circuit (104), the second input signal (S2) is converted into a second output signal, which is output via the second output (116).

2. Circuit arrangement (100) according to claim 1, wherein the switching element (142) comprises a transistor (144) which is electrically conductively connected to the ground terminal (120) and to the second output (116).

3. Circuit arrangement (100) according to claim 1 or 2, wherein the first circuit branch further comprises the first Zener diode (134), and wherein the first Zener diode (134) is connected in series with the first reverse polarity protection diode (132).

4. Circuit arrangement (100) according to claim 1, 2 or 3, wherein the first circuit branch further comprises the capacitor (140) for voltage stabilization.

5. Circuit arrangement (100) according to claim 1, 2, 3 or 4, wherein the second circuit branch further comprises the second Zener diode (148), and wherein the second Zener diode (148) is connected in series with the second reverse polarity protection diode (146).

## Revendications

1. Circuit (100), comprenant un premier sous-circuit (102) pour un premier canal (I) et un deuxième sous-circuit (104) pour un deuxième canal (II), où le premier sous-circuit (102) présente une première entrée (110) et une première sortie (114) pour la liaison avec le premier canal (I), et le deuxième sous-circuit (104) présente une deuxième entrée (112) et une deuxième sortie (116) pour la liaison avec le deuxième canal (II), où le premier sous-circuit (102) est prévu pour la transmission d'un premier signal d'entrée (S1) à la première entrée (110) avec une première polarité, et le deuxième sous-circuit (104) pour la transmission d'un deuxième signal d'entrée (S2) à la deuxième entrée (112) avec une première polarité et une deuxième polarité opposée à la première polarité,
où le deuxième sous-circuit (104) comprend en outre une première branche de circuit (106a) pour le traitement d'un deuxième signal d'entrée (S2) avec la première polarité et une deuxième branche de circuit (106b) pour le traitement d'un deuxième signal d'entrée (S2) avec la deuxième polarité,
où la première branche de circuit (106a) comprend une première diode de protection contre l'inversion de polarité (132), une connexion à la masse (120) et un élément de commutation (142), la première diode de protection contre l'inversion de polarité (132) étant montée dans le sens passant pour des signaux avec la première polarité, et l'élément de commutation (142) étant relié de manière électriquement conductrice à la première diode de protection contre l'inversion de polarité (132), et étant prévu pour relier de manière électriquement conductrice la deuxième sortie (116) à la connexion à la masse (120) en réaction à la réception d'un signal avec la première polarité ;
et où la deuxième branche de circuit (106b) comprend une deuxième diode de protection contre l'inversion de polarité (146), la deuxième diode de protection contre l'inversion de polarité (146) étant montée dans le sens passant pour des signaux avec la deuxième polarité, et la deuxième diode de protection contre l'inversion de polarité (146) étant reliée de manière électriquement conductrice à la deuxième sortie (116),
où, au moyen du deuxième sous-circuit (104), le deuxième signal d'entrée (S2) est converti en un deuxième signal de sortie délivré à la deuxième sortie (116).

2. Circuit (100) selon la revendication 1, où l'élément de commutation (142) comprend un transistor (144) relié de manière électriquement conductrice à la connexion à la masse (120) et à la deuxième sortie (116).

3. Circuit (100) selon la revendication 1 ou la revendication 2, où la première branche de circuit comprend en outre la première diode Zener (134), et où la première diode Zener (134) est montée en série avec la première diode de protection contre l'inversion de polarité (132).

4. Circuit (100) selon la revendication 1, 2 ou la revendication 3, où la première branche de circuit comprend en outre le condensateur (140) pour la stabilisation de tension.

5. Circuit (100) selon la revendication 1, 2, 3 ou la revendication 4, où la deuxième branche de circuit comprend en outre la deuxième diode Zener (148), et où la deuxième diode Zener (148) est montée en série avec la deuxième diode de protection contre l'inversion de polarité (146).
